# FASCICULE DE BREVET EUROPEEN

(11) **EP 2 198 259 B1**
(45) Date de publication et mention de la délivrance du brevet: **13.04.2011**
(21) Numéro de dépôt: 08841470.1
(22) Date de dépôt: 07.10.2008
(51) Int. Cl.: G01N 1/28, G01N 15/06, G01N 33/48

(54) **PROCEDE D'AJUSTEMENT AUTOMATISE DE LA DENSITE CELLULAIRE POUR LA REALISATION D'UNE PLAQUE D'ANALYSE**
AUTOMATISIERTES ZELLDICHTE-EINSTELLUNGSVERFAHREN ZUR HERSTELLUNG EINER ANALYSEPLATTE
AUTOMATED CELL DENSITY ADJUSTMENT METHOD FOR PRODUCING AN ANALYSIS PLATE

(30) Priorité: 09.10.2007 FR 0758160
(43) Date de publication de la demande: 23.06.2010
(73) Titulaire: NOVACYT, 78140 Velizy Villacoublay (FR)
(72) Inventeur: PELTIER, Eric, F-92140 Clamart (FR)
(74) Mandataire: Jacobson, Claude
(86) Numéro de dépôt international: PCT/FR2008/051808
(87) Numéro de publication internationale: WO 2009/053602

(56) Documents cités:
- EP-A- 1 775 571
- WO-A-87/07024
- WO-A-99/44743
- FR-A- 2 792 333

## Description

La présente invention concerne un procédé de réalisation d'une plaque d'analyse cellulaire du type comprenant un étalement cellulaire à analyser disposé sur une plaque d'analyse, ledit procédé comprenant les étapes suivantes :
- prélever une solution cellulaire à partir d'un flacon de prélèvement,
- disposer ladite solution prélevée dans une chambre de décantation disposée au-dessus de la plaque d'analyse,
- laisser décanter la solution afin d'obtenir l'étalement cellulaire sur la plaque d'analyse. L'invention concerne également un dispositif de réalisation d'une plaque d'analyse cellulaire permettant de mettre en oeuvre un tel procédé.

On réalise des plaques d'analyse cellulaire par exemple afin d'établir des diagnostics médicaux. Pour ce faire, un dépôt de cellules est effectué sur une lame de verre.

Les cellules sont prélevées au moyen d'une brosse de prélèvement, par exemple par frottis, puis la brosse est disposée dans un flacon de prélèvement où les cellules sont mises en solution. Une partie de la solution cellulaire est ensuite prélevée et disposée dans une chambre de décantation située au-dessus de la lame de verre. Après décantation et absorption du liquide de mélange cellulaire, on obtient un étalement cellulaire sur la lame de verre, ce qui forme la plaque d'analyse. Un tel procédé est par exemple décrit dans le document FR-2 792 333.

Il est souhaitable d'obtenir un étalement de densité constante en cellules et surtout d'avoir la présence de suffisamment de cellules pour obtenir un diagnostic pertinent. Dans certaines applications comme le frottis de dépistage du cancer du col de l'utérus, ce nombre de cellules doit satisfaire à la classification de Bethesda, qui est une classification pour standardiser le résultat diagnostic des frottis, et chaque étalement doit ainsi comprendre plus de 5000 cellules. Un ajustement du nombre de cellules prélevées peut donc être nécessaire si la densité des cellules n'est pas suffisante dans la solution.

Actuellement, la mesure de la densité cellulaire est réalisée sur les cellules présentes dans le flacon de prélèvement. C'est-à-dire que le prélèvement est réalisé puis disposé dans le flacon où il est mis en solution et la mesure de densité est réalisée afin de déterminer quelle quantité de suspension cellulaire il est nécessaire d'ajouter des cellules sur la plaque d'analyse pour en avoir suffisamment au moment de la lecture diagnostique. La mesure de densité est par exemple réalisée par néphélométrie, c'est-à-dire par mesure de la diffraction de la lumière qui traverse le flacon.

Cependant, ce type de mesure dans le flacon présente plusieurs inconvénients, Tout d'abord, la mesure est peu fiable car la brosse de prélèvement présente dans le flacon ou l'étiquette administrative d'identification du flacon collée sur celui-ci peuvent perturber cette mesure. D'autre part, le procédé de mesure concerne tous les éléments cellulaires présents dans le flacon, tels que les cellules épithéliales, les hématies, les cellules inflammatoires, etc., sans distinction et ne permet pas une mesure sélective des cellules représentatives et pertinentes pour le diagnostic du prélèvement. Enfin, si la quantité de suspension cellulaire est ajustée directement lors du prélèvement dans le flacon pour obtenir d'emblée une plaque d'analyse de densité cellulaire optimale, il n'existe pas d'automatisation complète de la procédure qui reste ouverte, ni de suivi de qualité permettant d'éditer un rapport mentionnant la faible densité cellulaire de la solution présente initialement dans le flacon de prélèvement et sa correction sur la plaque d'analyse par enrichissement secondaire.

D'autres documents : EP-A-1 775 571, WO 87107024 et WO 99/44743 impliquent des mesures optiques mais dans un contexte différent.

L'invention vise à pallier ces inconvénients en proposant un procédé de réalisation d'une plaque d'analyse du type précité permettant une mesure de la densité cellulaire fiable, pertinente et permettant un suivi qualité en cas de corrections.

A cet effet, l'invention concerne un procédé de réalisation d'une plaque d'analyse du type précité, dans lequel ledit procédé est caractérisé en ce qu'il comprend une étape de mesure de la densité cellulaire de la solution prélevée, ladite mesure étant réalisée dans la chambre de décantation.

Selon d'autres caractéristiques du procédé :
- le procédé de réalisation comprend une étape de comparaison de la densité cellulaire mesurée à une densité seuil ;
- le procédé de réalisation comprend une étape de prélèvement d'une solution cellulaire supplémentaire et d'ajout de cette solution prélevée dans la chambre de décartation si la densité cellulaire mesurée est inférieure à la densité seuil ;
- la densité seuil est sensiblement égale à 5000 cellules par étalement cellulaire ;
- la densité cellulaire est mesurée par diffraction de la lumière ou par dénombrement des cellules sur une surface donnée ; et
- l'étape de mesure de la densité cellulaire comprend une étape d'illumination de la chambre de décantation.

L'invention concerne également un dispositif réalisation d'une plaque d'analyse cellulaire du type comprenant au moins un flacon de prélèvement cellulaire, une chambre de décantation disposée sur une plaque d'analyse, des moyens de prélèvement d'une solution cellulaire à partir du flacon de prélèvement et d'introduction de ladite solution dans la chambre de décantation, caractérisé en ce qu'il comprend en outre des moyens de mesure de la densité cellulaire dans la chambre de décantation, de sorte à réaliser une plaque d'analyse tel que défini ci-dessus.

. Ce dispositif comprend en outre des moyens de mesure de la densité cellulaire dans la chambre de prélèvement, de sorte à réaliser une plaque d'analyse selon un procédé tel que décrit ci-dessus.

Selon d'autres caractéristiques du dispositif :
- les moyens de mesure de la densité cellulaire comprennent des moyens d'illumination de la chambre de décantation et des moyens de mesure de la diffraction de la lumière ou de dénombrement de cellules sur une surface donnée ;
- les moyens de mesure de la diffraction de la lumière ou de dénombrement de cellules sur une surface donnée comprennent une caméra ; et
- la caméra est portée par un bras mobile, ledit bras se déplaçant au-dessus d'une pluralité de chambres de décantation disposées au-dessus d'une pluralité de plaques d'analyse.

D'autres aspects et avantages de l'invention apparaîtront au cours de la description qui suit, donnée à titre d'exemple et faite en référence aux dessins annexés, dans lesquels :
- la Fig. 1 est une représentation schématique en perspective partielle d'un dispositif de réalisation d'une plaque d'analyse selon un mode de réalisation de l'invention,
- la Fig. 2 est une représentation schématique du dispositif de la Fig. 1 au cours d'une étape de mesure de la densité cellulaire d'une solution présente dans une chambre de décantation.

A des fins de simplification, le dispositif de réalisation d'une plaque d'analyse n'a pas été représenté dans son intégralité sur les figures.

Ce dispositif comprend généralement au moins un flacon de prélèvement cellulaire (non représenté), au moins une chambre de décantation 2 disposée sur une plaque d'analyse 4, des moyens de prélèvement (non représentés) d'une solution cellulaire à partir du flacon de prélèvement et d'introduction de ladite solution dans la chambre de décantation 2.

Le flacon de prélèvement et la chambre de décantation 2 sont disposées dans un plateau 6 pourvu d'au moins un logement de réception d'une plaque d'analyse 4 en dessous de la chambre de décantation 2. En pratique, une pluralité de chambres de décantation 2 et de plaques d'analyse 4 est prévue dans des empreintes correspondantes du plateau 6, pour des réalisations en série de plaques d'analyse.

La chambre de décantation 2 est un récipient sans fond de sorte que le contenu versé dans la chambre se déverse sur la plaque d'analyse, comme cela est par exemple décrit dans le document FR-2 792 333. La plaque d'analyse 4 est une lame de verre classique pour ce type d'applications.

Les moyens de prélèvement et d'introduction comprennent par exemple une pipette robotisée (non représentée), apte à se déplacer du flacon de prélèvement à une chambre de décantation 2 et actionnée pour prélever du contenu à partir du flacon et de verser celui-ci dans la chambre 2. Selon un mode de réalisation, la pipette est en outre prévue pour prélever un liquide de dilution de la solution cellulaire prélevée dans le flacon et pour mélanger ce liquide à la solution dans la pipette afin de diluer la solution prélevée et la reverser dans la chambre de décantation 2.

Un frottis est prélevé et déposé dans le flacon de prélèvement. Là, il subit un traitement afin de sélectionner les cellules pertinentes pour l'analyse, tel que cela est connu en soi. La solution obtenue est prélevée par les moyens de prélèvement et peut être diluée puis reversée dans la chambre de décantation 2 de façon automatisée.

La solution est laissée à décanter dans la chambre 2 afin d'obtenir un étalement cellulaire sur la plaque d'analyse 4 par absorption du liquide de la solution.

La plaque d'analyse comporte à une partie extrême un moyen d'identification par exemple du type code barre 8. Selon d'autres modes de réalisation, les moyens d'identification sont différents, par exemple un étiquette portant des informations ou une puce électronique du type puce RFID dont le contenu peut être lu à distance par des moyens de lecture.

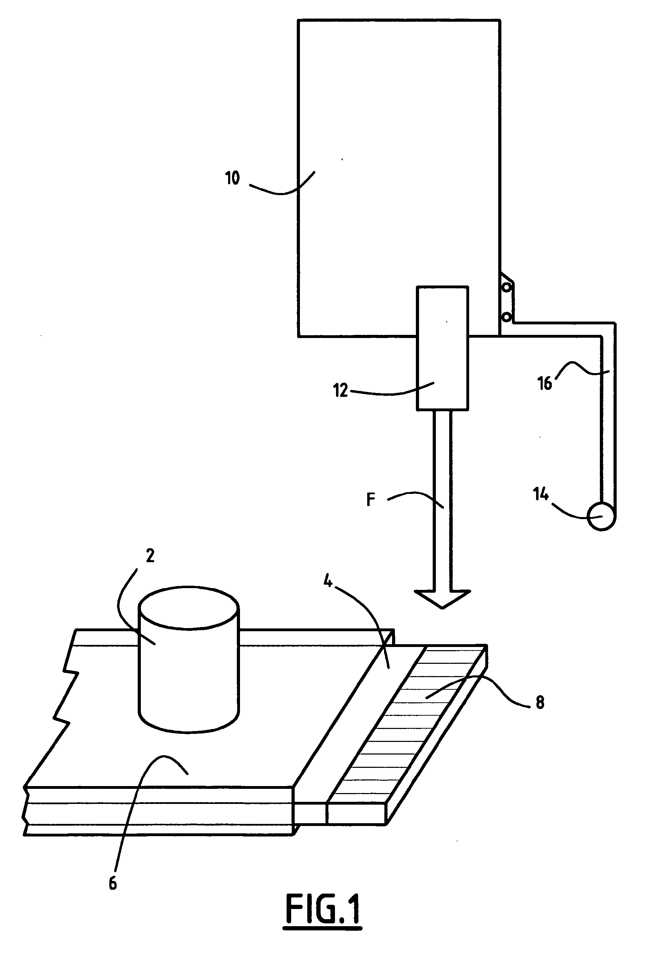

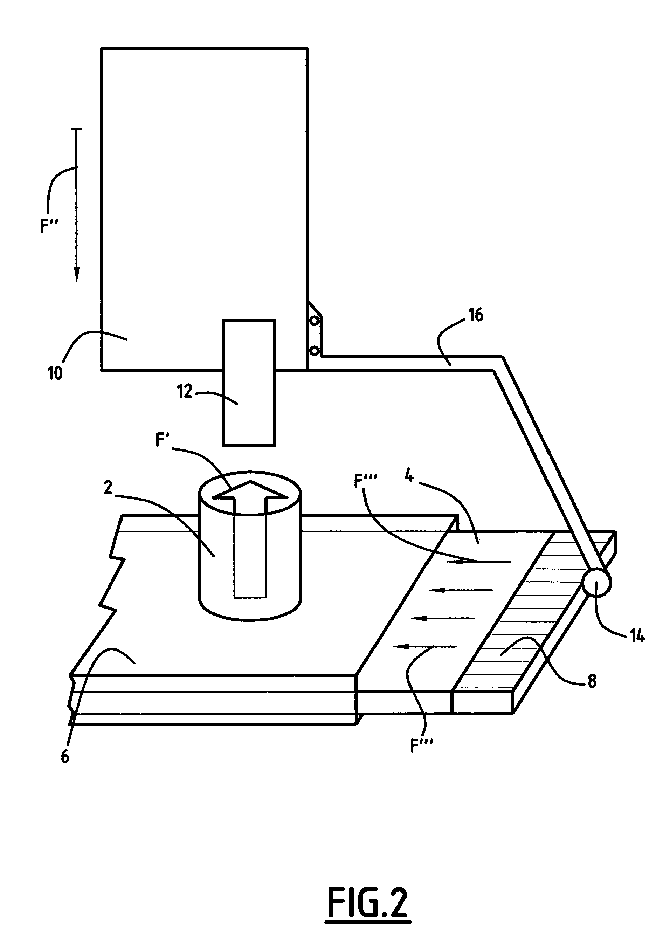

Un bras 10 est mobile au-dessus du plateau 6. Ce bras porte une caméra 12 agencée pour enregistrer des images du plateau 6, c'est-à-dire du contenu de la chambre de décantation 2 et de la plaque d'analyse 4, comme représenté par les flèches F et F' des Fig. 1 et 2 respectivement.

Au cours d'une première étape représentée sur la Fig. 1, le bras 10 est placé de telle sorte que la caméra 12 est braquée sur le code barre 8 et lit les informations d'identification de la plaque d'analyse 4. Ces informations sont par exemple transmises à un système de traitement informatique assurant le suivi qualité d'une pluralité de plaques d'analyse et regroupant des informations sur l'étalement cellulaire disposé sur cette plaque.

Selon le mode de réalisation représenté sur les Fig., la caméra 12 forme également des moyens de mesure de la densité cellulaire de la solution prélevée présente dans la chambre de décantation.

A cet effet, le bras 10 est abaissé, comme représenté par la flèche F" de la Fig. 2, et déplacé au dessus de la chambre de décantation 2 afin de réaliser l'acquisition des images du contenu de cette chambre, comme représenté par la flèche F'. L'amplitude de ce déplacement peut aller jusqu'au contact de la chambre de décantation afin d'obtenir une étanchéité à la lumière en réalisant une chambre noire afin d'optimiser la qualité de l'acquisition des images.

Les moyens de mesure de la densité cellulaire comporte en outre des moyens d'illumination de la chambre de décantation afin de permettre à la caméra 12 d'effectuer la mesure de densité. Selon le mode de réalisation représenté sur les Fig., le bras 10 porte une source lumineuse 14 disposée à la partie extrême d'une lame métallique élastique 16. Lorsque le bras 10 est abaissé, la source lumineuse 14 vient en contact avec le bord de la plaque d'analyse 4, puis lorsque le bras 10 est déplacé au-dessus de la chambre de décantation 2, la lame 16 se déforme de sorte à maintenir la source lumineuse 14 en place, comme représenté sur la Fig. 2. Le déplacement du bras 10 permet de plaquer la source lumineuse 14 contre la plaque d'analyse 2 afin d'avoir une transmission de lumière optimale. La source lumineuse 14 diffuse alors de la lumière dans la plaque d'analyse, comme représenté par les flèches F"' de la Fig. 2. L'illumination de la chambre de décantation 2 se fait donc latéralement. La source lumineuse 14 est par exemple une diode électroluminescente (DEL). Ces moyens d'illumination sont particulièrement avantageux, car ils sont indépendants du plateau 6 et sont faciles à entretenir. De plus, ces moyens sont peu coûteux à mettre en oeuvre.

La caméra 12 mesure la densité cellulaire par mesure de la diffraction de la lumière par la solution cellulaire dans la chambre de décantation ou par dénombrement de cellules sur une surface donnée. Ces méthodes de mesure sont connues en elles-mêmes et ne seront pas décrite en détail ici. La caméra 12 présente une résolution cellulaire suffisante pour ce type de mesures.

Selon un autre mode de réalisation non représenté, une caméra spécifique pour la mesure de la densité est prévue en plus de la caméra 12 de lecture des moyens d'identification 8. La caméra spécifique, également portée par le bras 10, est alors plus performante que la caméra 12, notamment en terme de résolution, et est spécifiquement dédiée à la mesure de la densité cellulaire.

Selon d'autres modes de réalisations non représentés, l'illumination de la chambre de décantation 2 est réalisée différemment. Ainsi, on prévoit par exemple des guides de lumière, par exemple du type fibres optiques, disposés dans le plateau 6 de sorte à être en contact avec les bords de la ou des plaques d'analyse 4 afin d'éclairer latéralement les chambres de décantation 2. En alternative, une source lumineuse est placée sur le bras 10 de sorte à éclairer la chambre de décantation 2 par le dessus. La source lumineuse est alors placée et agencée pour éviter les problèmes de réflexions parasites sur la surface de la solution prélevée présente dans la chambre de décantation 2. Selon une autre alternative, la source lumineuse éclaire la chambre de décantation 2 par en dessous. Le plateau est alors adapté et présente des trous de visualisation permettant de laisser passer la lumière.

La densité mesurée par les moyens décrits ci-dessus est comparée à une densité seuil, sensiblement égale à la densité minimale à avoir pour obtenir une analyse pertinente de l'étalement cellulaire. Cette comparaison est par exemple effectuée par le système de traitement informatique décrit ci-dessus. Selon un mode de réalisation, la densité seuil est sensiblement égale à 5000 cellules par étalement cellulaire, comme prescrit par la classification de Bethesda.

Si la densité mesurée est inférieure à la densité seuil, le procédé de réalisation de plaques d'analyse comprend une étape supplémentaire d'ajustement de la densité cellulaire de l'étalement. Les moyens de prélèvement prélèvent un volume d'une solution cellulaire supplémentaire du flacon de prélèvement et la verse dans la chambre de décantation 2 afin d'ajouter des cellules à l'étalement cellulaire après décantation. Le volume supplémentaire à prélever est par exemple préalablement calculé par le système de traitement informatique et les moyens de prélèvement automatisés sont réglés en conséquence.

L'information, selon laquelle un ajustement de la densité a été effectué, est enregistrée par le système de traitement informatique en relation avec l'identité de la plaque d'analyse 4 afin de permettre un suivi qualité du prélèvement cellulaire.

Le procédé et le dispositif décrits ci-dessus permettent d'obtenir une mesure de la densité fiable car réalisée directement dans la chambre de décantation 2 et non dans le flacon de prélèvement. En outre, la mesure ne concerne que les cellules pertinentes à l'analyse. La mesure permet également d'assurer un suivi qualité permettant d'éditer un rapport mentionnant la faible densité cellulaire de la solution présente dans le flacon de prélèvement et sa correction sur la plaque d'analyse par enrichissement secondaire.

## Revendications

1. Procédé de réalisation d'une plaque d'analyse cellulaire (4) comprenant un étalement cellulaire à analyser disposé sur une plaque d'analyse (4), ledit procédé comprenant les étapes suivantes :
- prélever une solution cellulaire à partir d'un flacon de prélèvement,
- disposer ladite solution prélevée dans une chambre de décantation (2) disposée au-dessus de la plaque d'analyse (4),
- laisser décanter la solution afin d'obtenir l'étalement cellulaire sur la plaque d'analyse (4),
ledit procédé étant **caractérisé en ce qu'**il comprend une étape de mesure de la densité cellulaire de la solution prélevée, ladite mesure étant réalisée dans la chambre de décantation (2).

2. Procédé de réalisation selon la revendication 1, **caractérisé en ce qu'**il comprend une étape de comparaison de la densité cellulaire mesurée à une densité seuil.

3. Procédé de réalisation selon la revendication 2, **caractérisé en ce qu'**il comprend une étape de prélèvement d'une solution cellulaire supplémentaire et d'ajout de cette solution prélevée dans la chambre de décantation (2) si la densité cellulaire mesurée est inférieure à la densité seuil.

4. Procédé de réalisation selon la revendication 2 ou 3, **caractérisé en ce que** la densité seuil est sensiblement égale à 5000 cellules par étalement cellulaire.

5. Procédé de réalisation selon l'une quelconque des revendications 1 à 4, **caractérisé en ce que** la densité cellulaire est mesurée par diffraction de la lumière ou par dénombrement des cellules sur une surface donnée.

6. Procédé de réalisation selon la revendication 5, **caractérisé en ce que** l'étape de mesure de la densité cellulaire comprend une étape d'illumination de la chambre de décantation (2).

7. Dispositif de réalisation d'une plaque d'analyse cellulaire, comprenant au moins un flacon de prélèvement cellulaire, une chambre de décantation (2) disposée sur une plaque d'analyse (4), des moyens de prélèvement d'une solution cellulaire à partir du flacon de prélèvement et d'introduction de ladite solution dans la chambre de décantation (2), **caractérisé en ce qu'**il comprend en outre des moyens de mesure de la densité cellulaire dans la chambre de décantation (2), de sorte à réaliser une plaque d'analyse (4) selon un procédé selon l'une quelconque des revendications 1 à 6.

8. Dispositif selon la revendication 7, **caractérisé en ce que** les moyens de mesure de la densité cellulaire comprennent des moyens d'illumination de la chambre de décantation (2) et des moyens de mesure de la diffraction de la lumière ou de dénombrement de cellules sur une surface donnée.

9. Dispositif selon la revendication 8, **caractérisé en ce que** les moyens de mesure de la diffraction de la lumière ou de dénombrement de cellules sur une surface donnée comprennent une caméra (12).

10. Dispositif selon la revendication 9, **caractérisé en ce que** la caméra est portée par un bras mobile (10), ledit bras (10) se déplaçant au-dessus d'une pluralité de chambres de décantation (2) disposées au-dessus d'une pluralité de plaques d'analyse (4).

11. Dispositif selon la revendication 10, **caractérisé en ce que** le bras porte en outre une source lumineuse (14) disposée à la partie extrême d'une lame métallique élastique (16) fixée au bras (10), ladite source lumineuse formant moyens d'illumination latérale de la chambre de décantation (2).

## Claims

1. A method for producing a cell analysis plate (4) comprising a thin layer of cells to be analysed placed on an analysis plate (4), said method comprising the following steps:
- taking a sample of a cell solution from a sample flask,
- placing said solution sample in a decantation chamber (2) positioned above the analysis plate (4),
- allowing the solution to decant in order to obtain the thin layer of cells on the analysis plate (4),
said method being **characterised in that** it comprises a step of measuring the cell density of the sampled solution, said measurement being taken in the decantation chamber (2).

2. The production method according to Claim 1, **characterised in that** it comprises a step of comparing the cell density measured with a threshold density.

3. The production method according to Claim 2, **characterised in that** it comprises a step of taking a sample of an additional cell solution and adding this sampled solution to the decantation chamber (2) if the cell density measured is less than the threshold density.

4. The production method according to Claim 2 or 3, **characterised** that the threshold density is substantially equal to 5,000 cells per thin layer of cells.

5. The production method according to any of Claims 1 to 4, **characterised in that** the cell density is measured by diffraction of light or by counting the cells on a given surface.

6. The production method according to Claim 5, **characterised in that** the step of measuring the cell density comprises a step of illuminating the decantation chamber (2).

7. A device for producing a cell analysis plate, comprising at least one cell sampling flask, a decantation chamber (2) positioned on an analysis plate (4), means for taking samples of a cell solution from the sample flask and introducing said solution into the decantation chamber (2), **characterised in that** it further comprises means for measuring the cell density in the decantation chamber (2) such as to produce an analysis plate (4) according to a method according to any of Claims 1 to 6.

8. The device according to Claim 7, **characterised in that** the means for measuring the cell density comprise means for illuminating the decantation chamber (2) and means for measuring the diffraction of light or for counting cells on a given surface.

9. The device according to Claim 8, **characterised in that** the means for measuring the diffraction of light or for counting cells on a given surface comprise a camera (12).

10. The device according to Claim 9, **characterised in that** the camera is carried by a moveable arm (10), said arm (10) moving above a plurality of decantation chambers (2) positioned above a plurality of analysis plates (4).

11. The device according to Claim 10, **characterised in that** the arm further carries a light source (14) positioned at the outermost portion of an elastic metal blade (16) fixed to the arm (10), said light source forming lateral illumination means of the decantation chamber (2).

## Patentansprüche

1. Verfahren zur Herstellung einer Zellanalyseplatte (4) umfassend eine auf einer Analyseplatte (4) angeordnete zu analysierende Zellverteilung, wobei das Verfahren die folgenden Schritte umfasst:
- Entnehmen einer Zelllösung aus einem Entnahmekolben,
- Anordnen der entnommenen Lösung in einer über der Analyseplatte (4) angeordneten Absetzkammer (2),
- Absetzen lassen der Lösung, um die Zellverteilung auf der Analyseplatte zu erhalten,
wobei das Verfahren **dadurch gekennzeichnet ist, dass** es einen Schritt des Messens der Zelldichte der entnommenen Lösung umfasst, wobei die Messung in der Absetzkammer (2) durchgeführt wird.

2. Herstellungsverfahren nach Anspruch 1, **dadurch gekennzeichnet, dass** es einen Vergleichsschritt mit der bei einer Schwellendichte gemessenen Zelldichte umfasst.

3. Herstellungsverfahren nach Anspruch 2, **dadurch gekennzeichnet, dass** es einen Schritt der Entnahme einer zusätzlichen Zelllösung und der Zugabe dieser entnommenen Lösung zu einer Absetzkammer (2) umfasst, wenn die gemessene Zelldichte unter der Schwellendichte liegt.

4. Herstellungsverfahren nach Anspruch 2 oder 3, **dadurch gekennzeichnet, dass** die Schwellendichte im Wesentlichen gleich 5000 Zellen pro Zellverteilung beträgt.

5. Herstellungsverfahren nach einem der Ansprüche 1 bis 4, **dadurch gekennzeichnet, dass** die Zelldichte durch Lichtstreuung oder durch Zählen der Zellen auf einer gegebenen Oberfläche gemessen wird.

6. Verfahren zur Herstellung nach Anspruch 5, **dadurch gekennzeichnet, dass** der Schritt des Messens der Zelldichte einen Schritt der Beleuchtung der Absetzkammer (2) umfasst.

7. Vorrichtung zu Herstellung einer Zellanalyseplatte, umfassend mindestens einen Zellentnahmekolben, eine über einer Analyseplatte (4) angeordnete Absetzkammer (2), Mittel für die Entnahme einer Zelllösung aus einem Entnahmekolben und für die Einbringung der Lösung in die Absetzkammer (2), **dadurch gekennzeichnet, dass** sie weiterhin Mittel zum Messen der Zelldichte in der Absetzkammer (2) umfasst, derart, dass eine Analyseplatte (4) nach einem Verfahren nach einem der Ansprüche 1 bis 6 hergestellt wird.

8. Vorrichtung nach Anspruch 7, **dadurch gekennzeichnet, dass** die Mittel zur Messung der Zelldichte Beleuchtungsmittel der Absetzkammer (2) und Mittel zum Messen der Lichtstreuung oder zum Zählen von Zellen auf einer gegebenen Oberfläche umfassen.

9. Vorrichtung nach Anspruch 8, **dadurch gekennzeichnet, dass** die Mittel zur Messung der Beugung des Lichts oder zum Zählen von Zellen auf einer gegebenen Oberfläche eine Kamera (12) umfassen.

10. Vorrichtung nach Anspruch 9, **dadurch gekennzeichnet, dass** die Kamera von einem beweglichen Arm (10) getragen wird, wobei der Arm (10) sich über einer Vielzahl von Absetzkammern (2) verschiebt, die über einer Vielzahl von Analyseplatten angeordnet sind.

11. Vorrichtung nach Anspruch 10, **dadurch gekennzeichnet, dass** der Arm weiterhin eine Lichtquelle (14) trägt, die am äußeren Teil eines elastischen, an dem Arm (10) befestigten Metallblatts (16) angeordnet ist, wobei die Lichtquelle seitliche Beleuchtungsmittel der Absetzkammer (2) bildet.
